# FASCICULE DE BREVET EUROPEEN

(11) **EP 1 125 831 B1**
(45) Date de publication et mention de la délivrance du brevet: **01.08.2007**
(21) Numéro de dépôt: 01400340.4
(22) Date de dépôt: 09.02.2001
(51) Int. Cl.: B62D 33/06

(54) **Dispositif de suspension d'une charge sur un support porteur, en particulier d'une cabine sur un châssis de véhicule industriel**
Aufhängungsvorrichtung für eine Tragegestell
Suspension device for a load on a support , specifically for a cabin on an industrial chassis

(30) Priorité: 17.02.2000 FR 0001953
(43) Date de publication de la demande: 22.08.2001
(73) Titulaire: HUTCHINSON, 75008 Paris (FR)
(72) Inventeur: Jomaa, Mehdi, 92110 Clichy (FR)
(74) Mandataire: Bolinches, Michel Jean-Marie

(56) Documents cités:
- EP-A- 0 857 590
- US-A- 3 129 973
- US-A- 5 354 091

## Description

L'invention concerne un dispositif de suspension d'une charge sur un support porteur, en particulier d'une cabine sur un châssis de véhicule industriel.

D'une manière générale, les systèmes de suspension montés entre une charge, telle qu'une cabine de véhicule industriel, et un support porteur, tel que le châssis du véhicule, sont constitués par des organes élastiques qui sont répartis en plusieurs points discrets, deux vers l'avant et deux vers l'arrière. Les organes élastiques comprennent un élément principal, à savoir un ressort constitué par un plot en élastomère ou par un ressort métallique ou pneumatique.

Cependant, comme de tels organes élastiques ne possèdent pas de raideurs latérale et angulaire suffisantes, on doit leur ajouter un dispositif mécanique de triangulation et une barre de torsion anti-roulis qui viennent sérieusement compliquer le dispositif de suspension. Il en résulte une structure complexe, lourde et onéreuse.

D'une manière générale, les constructeurs de véhicules poids lourds veulent privilégier la conception de systèmes de suspension présentant une structure notablement allégée pour en diminuer le nombre des composants et donc le coût, tout en ayant de bonnes performances.

Le document US-A-3,129,973 décrit une suspension élastique de la cabine d'un conducteur d'un camion automobile, qui est constituée par un ressort lamellaire présentant plusieurs couches, le préambule de la revendication principalement tenant compte de ce document.

Un but de l'invention est de concevoir un dispositif de suspension qui est basé sur l'utilisation d'une lame élastique à quatre points de fixation ou d'appui pour remplacer avantageusement les ressorts, les dispositifs anti-roulis et les dispositifs de triangulation des systèmes de suspension précités.

A cet effet, l'invention propose un dispositif de suspension d'une cabine sur un châssis de véhicule industriel, le dispositif comprenant au moins une lame élastique apte à être fixée en deux points du côté de la cabine et en deux points du côté du châssis, ce système de suspension faisant référence à un axe de guidage (X-X) longitudinal du véhicule et perpendiculaire à la lame élastique, à un axe de guidage (Y-Y) perpendiculaire à l'axe (X-X) et à un axe vertical de suspension (Z-Z) perpendiculaire aux deux axes (X-X ; Y-Y), caractérisé en ce que chaque point de fixation de la lame comprend une articulation de type élastique, en particulier tourillonnante élastique, et en ce que, par rapport à l'axe vertical (Z-Z) d'une part, et aux deux axes (X-X ; Y-Y) d'autre part, chaque point de fixation côté cabine et côté châssis assure une faible raideur angulaire autour de l'axe d'articulation (X-X) et une forte raideur angulaire autour des autres axes (Y-Y ; Z-Z).

Avantageusement, la lame est réalisée en matériau composite, de la résine époxy par exemple.

A titre d'exemple, les raideurs angulaires des points de fixation de la lame peuvent être déterminées par la forme et les dimensions données aux éléments constitutifs de ces points de fixation.

Selon un mode de réalisation de l'invention, l'articulation de chaque point de fixation de la lame à la charge est une articulation de type élastique qui est constituée par un arbre solidaire de la charge, par un bloc en matériau élastomère rapporté autour de l'arbre et par une armature métallique solidaire de la lame et qui enserre le bloc en matériau élastomère tout en le précomprimant.

Chaque point de fixation de la lame à la charge peut également comprendre des moyens pour assurer une forte raideur suivant l'axe de l'articulation et autour de l'axe de suspension, ces moyens étant constitués par au moins un bossage périphérique formé autour de l'arbre de l'articulation du point de fixation.

Selon un mode de réalisation avantageux de l'invention, chaque point de fixation de la lame à la charge comprend des moyens pour assurer au mieux les raideurs linéaires souhaitées suivant plusieurs axes du point de fixation, ces moyens étant intercalés entre l'armature métallique et la lame, ces moyens étant par exemple constitués par deux pavés en élastomère rapportés de part et d'autre de la lame, par collage par exemple, et logés à l'intérieur de l'armature.

Selon un mode de réalisation de l'invention, chaque articulation élastique des points d'appui de la lame au châssis du véhicule est une articulation de type élastique qui est constituée par un arbre solidaire de la lame, par un bloc en matériau élastomère qui est rapporté autour de l'arbre, et par deux armatures solidaires du châssis et fixées l'une à l'autre et qui enserrent le bloc en le précomprimant.

Avantageusement, les armatures des articulations des points de fixation au châssis sont raccordées à ce dernier par l'intermédiaire d'un dispositif de basculement de la cabine par rapport au châssis.

Par ailleurs, chaque point de fixation de la lame au châssis peut comprendre également des moyens pour assurer une forte raideur suivant les axes de guidage et autour de l'axe de suspension, ces moyens sont constitués par au moins un bossage périphérique formé autour de l'arbre de l'articulation du point de fixation.

L'invention a également pour objet un véhicule industriel comprenant au moins un châssis et une cabine qui est portée par ledit châssis au moyen d'un système qui comprend au moins un dispositif de suspension selon l'invention, ce dispositif étant situé à l'avant et/ou à l'arrière de la cabine.

Un dispositif de suspension selon l'invention présente de nombreux avantages parmi lesquels on peut notamment citer :
- une réduction importante du nombre des composants,
- une réduction de la masse totale,
- une simplicité de montage, et
- une maintenance facilitée du fait que les constructeurs n'ont plus qu'une seule référence à gérer.

Par ailleurs, le dispositif de suspension selon l'invention n'est pas du type intégré, ce qui se traduirait par des raideurs angulaires et linéaires déterminées au niveau des points de fixation de la lame à la charge et au support porteur. Pour s'adapter à différents cahiers des charges quant à ces raideurs, il faudrait alors envisager des solutions au cas par cas. Au contraire, selon l'invention, avec une même lame on a la possibilité de s'adapter à des raideurs angulaires et linéaires différentes en jouant sur les caractéristiques de certains éléments constitutifs des points de fixation et sans avoir à changer l'ensemble des éléments.

D'autres avantages, caractéristiques et détails de l'invention ressortiront du complément de description qui va suivre, en référence aux dessins annexés, donnés uniquement à titre d'exemple et dans lesquels :
- la figure 1 est une vue schématique en perspective d'une cabine d'un véhicule industriel à laquelle peut s'appliquer le dispositif de suspension selon l'invention,
- la figure 2 est une vue de côté simplifiée d'un véhicule industriel pour montrer schématiquement la présence d'un système de suspension monté entre la cabine et le châssis du véhicule,
- la figure 3 est une vue en perspective d'une lame élastique constituant un élément de base du dispositif de suspension selon l'invention,
- la figure 4 est une vue en perspective d'un mode de réalisation d'un dispositif de suspension selon l'invention,
- la figure 5 est une demi-vue en coupe longitudinale du dispositif de suspension de la figure 4 pour illustrer les moyens constitutifs des points de fixation de la lame du côté de la cabine et du côté du châssis du véhicule,
- la figure 6 est une vue en coupe d'une variante de réalisation des moyens constitutif d'un point de fixation de la lame du côté de la cabine du véhicule,
- la figure 7 est une vue en coupe suivant la ligne VII-VII de la figure 6,
- la figure 8 est une vue en coupe suivant la ligne VIII-VIII de la figure 6,
- la figure 9 est une vue de dessus d'une autre variante de réalisation des points de fixation de la lame du côté de la cabine du véhicule,
- la figure 10 est une demi-vue en coupe longitudinale du dispositif de fixation de la figure 4 pour illustrer les moyens constitutifs d'un point de fixation de la lame du côté du châssis du véhicule,
- la figure 11 est une vue en coupe suivant la ligne XI-XI de la figure 10, et
- la figure 12 est une vue en perspective d'une variante de réalisation des moyens constitutifs d'un point de fixation de la lame du côté du châssis du véhicule.

L'invention concerne un dispositif de suspension d'une charge sur un support porteur, qui va être décrit ci-après dans le cas où la charge est constituée par une cabine de véhicule industriel, sachant que ce dispositif ne constitue pas nécessairement à lui seul le système de suspension de la cabine.

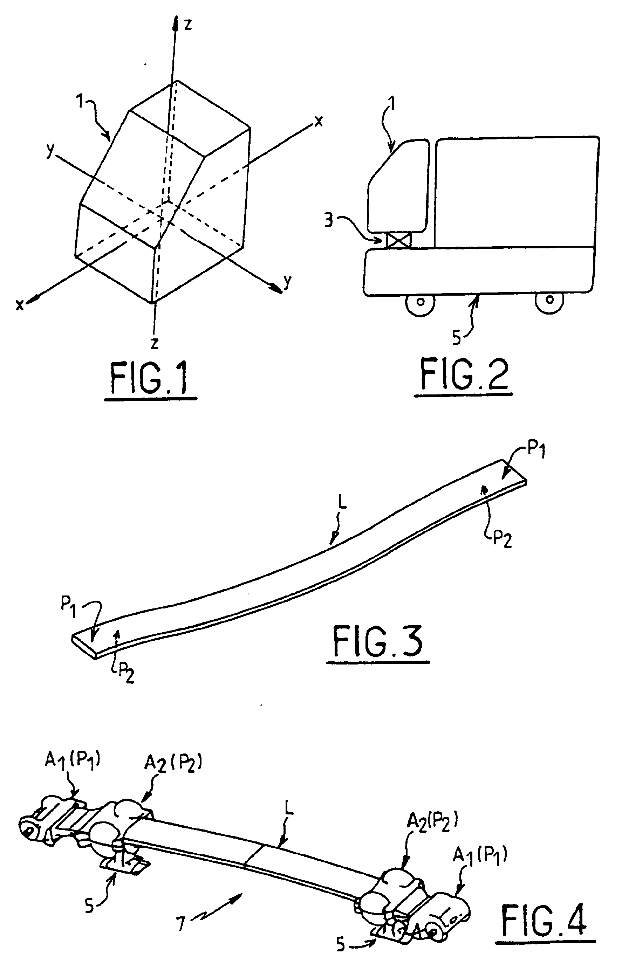

On se réfère à la figure 1 qui illustre schématiquement la cabine 1 d'un véhicule industriel avec un système de référence cabine à trois axes orthonormés, un axe X-X qui correspond à l'axe longitudinal du véhicule, un axe transversal Y-Y et un axe vertical Z-Z.

D'une façon connue en soi, un système de suspension 3 est monté entre la cabine 1 et le châssis 5 du véhicule, comme cela est schématiquement illustré à la figure 2.

Lorsque le véhicule roule sur une chaussée, la cabine 1 est soumise à un ensemble de sollicitations mécaniques qui sont susceptibles de provoquer :
- un mouvement d'avance de la cabine 1 suivant l'axe X-X et/ou de roulis autour de cet axe X-X,
- un mouvement de tamis de la cabine 1 suivant l'axe Y-Y et/ou de galop autour de cet axe Y-Y, et/ou
- un mouvement de rebond de la cabine 1 suivant l'axe Z-Z et/ou de lacet autour de cet axe Z-Z.

D'une manière générale, pour une charge quelconque, l'axe vertical Z-Z est l'axe de suspension de la charge, et les axes X-X et Y-Y sont des axes de guidage.

Le système de suspension 3, tel que schématiquement illustré à la figure 2 comprend au moins un dispositif de suspension 7 selon l'invention qui est basé sur l'utilisation d'une lame élastique L, de préférence une lame composite en résine époxy par exemple qui peut être chargée d'une matière de renforcement telle des fibres de verre ou de carbone par exemple.

Une telle lame L, telle qu'illustrée sur la figure 3, est de forme allongée, présente une épaisseur faible par rapport à sa largeur, cette épaisseur n'étant pas nécessairement constante sur toute la longueur de la lame, et est fixée en quatre points de fixation. Ces quatre points se répartissent en deux points de fixation P1 à la cabine 1 et en deux points de fixation P2 au châssis 5. Les deux points P1 d'une part et les deux points P2 d'autre part, sont disposés symétriquement par rapport à l'axe transversal médian de la lame L. Les deux points d'appui P1 de la lame L du côté de la cabine 1 sont par exemple situés aux deux extrémités de la lame L.

D'une manière générale, les points de fixation P1 et P2 de la lame L assurent des raideurs angulaires et linéaires par rapport aux axes X-X, Y-Y et Z-z qui doivent satisfaire au mieux les spécifications d'un cahier des charges propre à chaque véhicule industriel et à chaque constructeur.

Un mode de réalisation d'une lame L équipée des moyens constitutifs des points de fixation P1 et P2, est illustré à titre d'exemple sur la figure 4. La lame L s'étend sensiblement parallèlement à l'axe de guidage Y-Y.

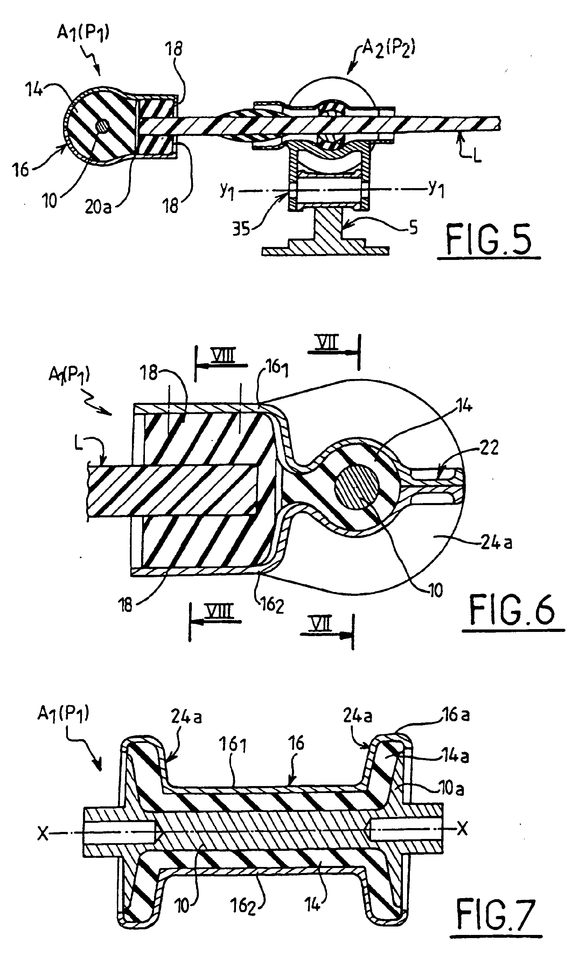

On va décrire ci-après, en référence aux figures 4 et 5, un exemple des moyens constitutifs de l'un des deux points de fixation P1 de la lame L à la cabine 1, ces moyens étant les mêmes pour l'autre point de fixation P1.

Chaque point de fixation P1 comprend une articulation A1 de type élastique ou tourillonnante qui forme un pivot autour de l'un des deux axes de guidage, l'axe X-X par exemple. Sur les figures 4 et 5, l'articulation A1 est de type élastique et est constituée par un arbre 10 solidaire de la cabine 1 par des moyens classiques non représentés, par un bloc 14 en un matériau élastomère par exemple qui est rapporté autour de l'arbre 10 en étant adhérisé ou non à ce dernier, et par une armature métallique 16 solidaire de la lame L, comme cela sera décrit plus loin, et qui enserre l'ensemble formé par l'arbre 10 et le bloc 14. Une rotation relative entre l'arbre 10 et l'armature 16 est ainsi possible.

L'armature 16 présente une forme en U avec un fond et deux branches, le bloc 14 en élastomère venant s'encastrer dans le fond de l'armature 16, par exemple. Cette armature 16 permet de précomprimer le matériau élastomère qui forme le bloc 14, ce qui a notamment pour effet de renforcer la solidarisation entre le bloc 14 et l'arbre 10 lorsqu'ils ne sont pas adhérisés l'un à l'autre, mais surtout de permettre au matériau élastomère de mieux travailler en compression.

D'une manière générale, chaque point de fixation P1 assure les raideurs angulaires souhaitées autour de plusieurs axes, en l'occurrence une faible raideur autour de l'axe de guidage X-X ou axe de l'articulation A1, et une forte raideur autour de l'autre axe de guidage Y-Y et de l'axe de suspension Z-Z.

Concrètement, les raideurs angulaires des points de fixation P1 sont déterminées par les formes géométriques et les dimensions données aux éléments constitutifs de ces points de fixation.

Avantageusement, on prévoit au niveau de chaque point de fixation P1 des moyens distincts ou découplés de l'articulation A1 pour assurer un bon compromis entre les raideurs linéaires souhaitées suivant les axes X-X, Y-Y et Z-Z de chaque point de fixation P1.

Selon un exemple de réalisation, ces moyens sont constitués par deux pavés 18 en caoutchouc. Plus précisément, les espaces délimités entre la lame L et les deux branches de l'armature 16, qui s'étendent en direction de la lame L et au-delà du bloc 14, sont comblés par deux pavés 18 qui sont adhérisés à la lame L pour la rendre ainsi solidaire de l'articulation A1. Au montage, les pavés 18 sont par exemple fixés de part et d'autre de la lame L, et l'ensemble est ensuite encastré dans l'armature 16. Les dimensions des deux pavés 18 sont notamment utilisées pour régler la raideur des points de fixation P1 suivant les axes X-X et Y-Y.

II est à noter également que les deux pavés 18 ne viennent pas au contact du bloc 14 qui entoure l'arbre 10, de manière à ménager un espace entre eux qui forme une butée élastique ou progressive 20a suivant l'axe de guidage Y-Y et qui est réglable suivant la largeur donnée audit espace.

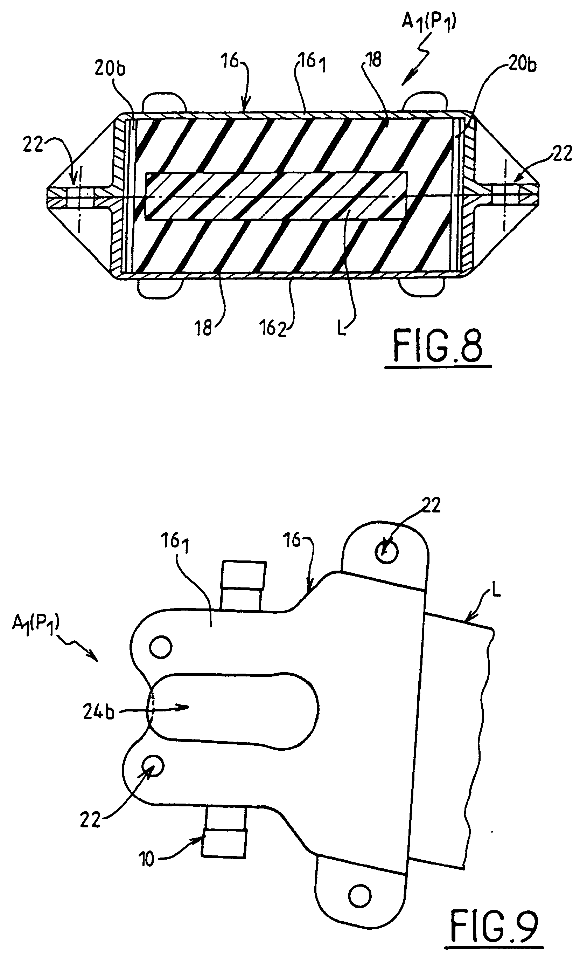

Selon une première variante de réalisation illustrée sur les figures 6 à 8, l'armature 16 est scindée en deux armatures 16₁ et 16₂ qui sont fixées l'une à l'autre en 22 par des moyens classiques (figures 6 et 8), des vis ou boulons par exemple.

Par ailleurs, on peut prévoir au niveau de chaque articulation A1 des points de fixation P1, des moyens pour assurer notamment une forte raideur suivant l'axe de guidage X-X et autour de l'axe de suspension Z-Z, de chaque point de fixation P1.

Ces moyens sont par exemple constitués par deux bossages périphériques 24a respectivement situés vers les deux extrémités de l'arbre 10 de chaque articulation A1. Plus précisément, chaque bossage latéral 24a est constitué par trois bossages 10a, 14a et 16a qui sont respectivement formés par l'arbre 10, le bloc 14 et l'armature 16. En variante, comme illustré sur la figure 9, les deux bossages latéraux 24a de chaque articulation A1 sont remplacés par un bossage central 24b qui assure la même fonction.

En se reportant à la figure 8, on notera que les deux extrémités latérales des pavés 18 intercalés entre l'armature 16 et la lame L ne viennent pas en contact avec ladite armature 16 de manière à délimiter un espace qui forme une butée élastique ou progressive 20b suivant l'axe de guidage X-X et qui est réglable suivant la largeur donnée audit espace.

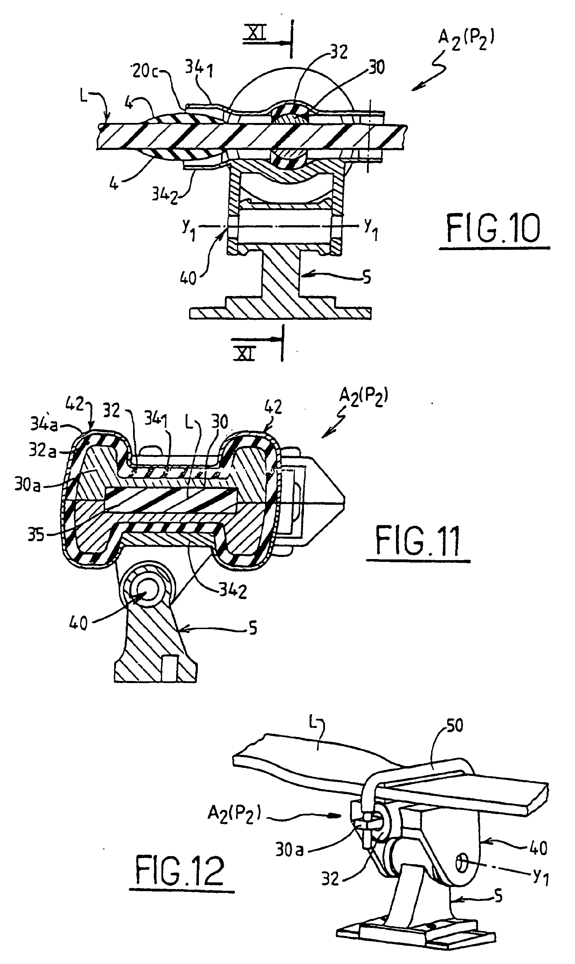

On va décrire maintenant, en référence aux figures 10 et 11, un exemple des moyens constitutifs de l'un des deux points de fixation P2 de la lame L au châssis 5 du véhicule, ces moyens étant les mêmes pour l'autre point de fixation P2.

D'une manière générale, au niveau de chaque point de fixation P2, on va également chercher à assurer une faible raideur angulaire autour de l'axe de guidage X-X et une forte raideur linéaire suivant les axes Y-Y et Z-Z.

Chaque point de fixation P2 comprend une articulation A2 de type élastique qui est constituée par un arbre 30 formant pivot autour de l'axe X-X, par un bloc 32 en élastomère qui entoure l'arbre 30, et par deux armatures 34₁ et 34₂ fixées l'une à l'autre et qui enserrent le bloc 32 en le précomprimant.

L'arbre 30 présente une ouverture transversale 35 suivant l'axe Y-Y. La lame L traverse cette ouverture 35 et est adhérisée à l'arbre 30.

L'armature 34₁ est raccordée au châssis 5 par l'intermédiaire d'un dispositif de basculement 40 de la cabine 1 autour d'un axe Y1-Y1 parallèle à l'axe de guidage Y-Y. En effet, le dispositif de suspension ne doit pas empêcher le basculement de la cabine 1 par rapport au châssis 5 pour pouvoir notamment accéder au bloc moteur du véhicule.

Par ailleurs, on peut prévoir au niveau de chaque articulation A2 des points de fixation P2, des moyens pour assurer notamment une forte raideur angulaire autour de l'axe Z-Z et une forte raideur linéaire suivant les axes X-X et Y-Y, tout en permettant une rotation autour de l'axe X-X.

Ces moyens sont par exemple constitués par deux bossages périphériques 42 respectivement situés vers les deux extrémités de l'arbre 30 de chaque articulation A2. Plus précisément, chaque bossage latéral 42 est constitué par trois bossages 30a, 32a et 34a qui sont respectivement formés par l'arbre 30, le bloc 32 et les deux armatures 34₁ et 34₂.

En se reportant à la figure 10, une butée élastique ou progressive 20c suivant l'axe Z-Z est prévue au niveau de chaque articulation A2. Cette butée 20c est formée par un espace annulaire délimité entre la lame L et une extrémité libre des deux armatures 34₁ et 34₂, et est réglable suivant l'épaisseur donnée à deux bossages 44 en élastomère rapportés de part et d'autre de la lame L.

Sur la variante de réalisation illustrée sur la figure 12, la lame L ne traverse plus l'arbre 30 de l'articulation A2, mais est rendue solidaire de cet arbre 30 au moyen d'une sangle 50 dont les deux extrémités sont fixées aux deux extrémités 30a de l'arbre 30.

Ainsi, avec un dispositif de suspension selon l'invention, les éléments constitutifs des points de fixation de la lame L permettent d'arriver à un bon compromis entre les raideurs angulaires et linéaires souhaitées sans avoir à reconfigurer l'ensemble des éléments constitutifs de ces points de fixation.

D'une manière générale, les deux pavés 18 qui sont montés au niveau des points d'appui P1 de la lame L du côté de la cabine 1, pourraient être montés au niveau des points de fixation P2 de la lame L du côté du châssis 5, et les positions des points de fixation P1 et P2 sur la lame L pourraient être inversées.

La lame L, telle qu'illustrée à la figure 4, peut constituer la partie avant et/ou arrière du système de suspension de la cabine 1. En effet, un système de suspension complet de la cabine 1 ne peut comprendre qu'une seule lame L montée vers l'avant ou vers l'arrière de la cabine 1, le reste du système de suspension étant alors constitué par deux dispositifs discrets à ressorts par exemple. On peut même envisager un système de suspension avec deux lames croisées. D'une manière générale, le choix est fait en fonction du cahier des charges du constructeur de manière à arriver à un compromis satisfaisant.

## Revendications

1. Dispositif de suspension d'une cabine (1) sur un châssis (5) de véhicule industriel, le dispositif comprenant au moins une lame élastique (L) apte à être fixée en deux points (P1) du côté de la cabine (1) et en deux points (P2) du côté du châssis (5), ce système de suspension faisant référence à un axe de guidage (X-X) longitudinal du véhicule et perpendiculaire à la lame élastique (L), à un axe de guidage (Y-Y) perpendiculaire à l'axe (X-X) et à un axe vertical de suspension (Z-Z) perpendiculaire aux deux axes (X-X ; Y-Y), **caractérisé en ce que** chaque point de fixation (P1, P2) de la lame (L) comprend une articulation (A1, A2) de type élastique, en particulier tourillonnante élastique, et **en ce que**, par rapport à l'axe vertical (Z-Z) d'une part, et aux deux axes (X-X;Y-Y) d'autre part, chaque point de fixation (P1, P2) côté cabine (1) et côté châssis (5) assure une faible raideur angulaire autour de l'axe d'articulation (X-X) et une forte raideur angulaire autour des autres axes (Y-Y, Z-Z).

2. Dispositif de suspension selon la revendication 1, **caractérisé en ce que** la lame (L) est réalisée en matériau composite, de la résine époxy par exemple.

3. Dispositif de suspension selon la revendication 1 ou 2, **caractérisé en ce que** les raideurs angulaires des points de fixation (P1, P2) de la lame (L) sont déterminées par la forme et les dimensions données aux éléments constitutifs de ces points de fixation.

4. Dispositif de suspension selon l'une des revendications précédentes, **caractérisé en ce que** l'articulation (A1) de chaque point de fixation (P1) de la lame (L) à la cabine (1) est une articulation (A1) de type élastique qui est constituée par un arbre (10) solidaire de la cabine (1), par un bloc (14) en matériau élastomère rapporté autour de l'arbre (10) et par une armature métallique (16) solidaire de la lame (L) et qui enserre le bloc (14) en matériau élastomère tout en le précomprimant.

5. Dispositif de suspension selon la revendication 4, **caractérisé en ce que** l'armature (16) est en une ou deux parties.

6. Dispositif de suspension selon la revendication 4 ou 5, **caractérisé en ce que** chaque point de fixation (P1) de la lame (L) à la cabine (1) comprend également des moyens pour assurer une forte raideur linéaire suivant l'axe (X-X) et une forte raideur angulaire autour de l'axe de suspension (Z-Z).

7. Dispositif de suspension selon la revendication 6, **caractérisé en ce que** lesdits moyens sont constitués par au moins un bossage périphérique (25) formé autour de l'arbre (10) de l'articulation (A1) du point de fixation (P1).

8. Dispositif de suspension selon l'une des revendications 4 à 7, **caractérisé en ce que** chaque point de fixation (P1) de la lame (L) à la cabine (1) comprend des moyens pour assurer au mieux les raideurs linéaires souhaitées suivant plusieurs axes du point de fixation, ces moyens étant intercalés entre l'armature métallique (16) et la lame (L).

9. Dispositif de suspension selon la revendication 8, **caractérisé en ce que** lesdits moyens permettent d'ajuster les raideurs linéaires des points de fixation (P1) de la lame (L) à la cabine (1) suivant les axes de guidage (X-X,Y-Y).

10. Dispositif de suspension selon la revendication 8, **caractérisé en ce que** lesdits moyens sont constitués par deux pavés (18) en élastomère rapportés de part et d'autre de la lame (L), par collage par exemple, et logés à l'intérieur de l'armature (16).

11. Dispositif de suspension selon la revendication 10, **caractérisé en ce que** les deux pavés (18) en élastomère sont logés à l'intérieur de l'armature (16) en ménageant des espaces (20a, 20b) qui définissent des butées élastiques ou progressives.

12. Dispositif de suspension selon l'une des revendications précédentes, **caractérisé en ce que** chaque articulation élastique (A2) des points d'appui (P2) de la lame (L) au châssis (5) du véhicule est une articulation de type élastique qui est constituée par un arbre (30) solidaire de la lame (L), par un bloc (32) en matériau élastomère qui est rapporté autour de l'arbre (30), et par deux armatures (34a,34b) solidaires du châssis et fixées l'une à l'autre et qui enserrent le bloc (32) en le précomprimant.

13. Dispositif de suspension selon la revendication 12, **caractérisé en ce que** l'arbre (30) présente une ouverture transversale (35) qui est traversée par la lame (L).

14. Dispositif de suspension selon la revendication 12 ou 13, **caractérisé en ce que** l'armature (34a) est raccordée au châssis (5) du véhicule par l'intermédiaire d'un dispositif de basculement (40) de la cabine (1) par rapport au châssis (5).

15. Dispositif de suspension selon l'une des revendications 12 à 14, **caractérisé en ce que** chaque point de fixation (P2) de la lame (L) au châssis (5) comprend également des moyens pour assurer une forte raideur linéaire suivant les axes de guidage (X-X,Y-Y) et une forte raideur angulaire autour de l'axe de suspension (Z-Z).

16. Dispositif de suspension selon la revendication 15, **caractérisé en ce que** lesdits moyens sont constitués par au moins un bossage périphérique (42) formé autour de l'arbre (30) de l'articulation (A2) du point de fixation (P2).

17. Dispositif de suspension selon l'une des revendications 12 à 16, **caractérisé en ce que** chaque point de fixation (P2) de la lame (L) au châssis (5) comprend également une butée élastique ou progressive (20c) suivant l'axe de suspension (Z-Z).

18. Dispositif de suspension selon la revendication 17, **caractérisé en ce que** ladite butée (20c) est constituée par un espace annulaire délimité entre deux bossages (44) en élastomère rapportés de part et d'autre de la lame (L) et une extrémité libre de l'armature (34).

19. Véhicule industriel comprenant au moins un châssis (5) et une cabine (1), **caractérisé en ce que** la cabine (1) est portée par le châssis (5) au moyen d'un système de suspension qui comprend au moins un dispositif tel que défini par l'une quelconque des revendications précédentes.

20. Véhicule industriel selon la revendication 19, **caractérisé en ce que** le dispositif de suspension est situé à l'avant et/ou à l'arrière de la cabine.

## Claims

1. Device for suspending a cabin (1) on a chassis (5) of an industrial vehicle, the device comprising at least one resilient plate (L) which is capable of being fixed at two points (P1) of the side of the cabin (1) and at two points (P2) of the side of the chassis (5), this suspension system referring to a longitudinal guiding axis (X-X) of the vehicle which is perpendicular relative to the resilient plate (L), a guiding axis (Y-Y) which is perpendicular relative to the axis (X-X) and a vertical suspension axis (Z-Z) which is perpendicular relative to the two axes (X-X; Y-Y), **characterised in that** each fixing point (P1, P2) of the plate (L) comprises an articulation (A1, A2) of the resilient type, in particular one which pivots in a resilient manner, and **in that**, relative to the vertical axis (Z-Z), on the one hand, and to the two axes (X-X; Y-Y), on the other hand, each fixing point (P1, P2) at the cabin side (1) and at the chassis side (5) provides a low level of angular rigidity about the articulation axis (X-X) and a high level of angular rigidity about the other axes (Y-Y, Z-Z).

2. Suspension device according to claim 1, **characterised in that** the plate (L) is produced from composite material, for example, from epoxy resin.

3. Suspension device according to claim 1 or 2, **characterised in that** the levels of angular rigidity of the fixing points (P1, P2) of the plate (L) are determined by the shape and the dimensions given to the constituent elements of these fixing points.

4. Suspension device according to any one of the preceding claims, **characterised in that** the articulation (A1) of each point (P1) for fixing the plate (L) to the cabin (1) is an articulation (A1) of the resilient type which is constituted by a shaft (10) which is fixedly joined to the cabin (1), by a block (14) of elastomer material which is fitted around the shaft (10) and by a metal casing (16) which is fixedly joined to the plate (L) and which surrounds the block (14) of elastomer material so as to precompress it.

5. Suspension device according to claim 4, **characterised in that** the casing (16) is in one or two parts.

6. Suspension device according to claim 4 or 5, **characterised in that** each point (P1) for fixing the plate (L) to the cabin (1) also comprises means for providing a high level of linear rigidity along the axis (X-X) and a high level of angular rigidity about the suspension axis (Z-Z).

7. Suspension device according to claim 6, **characterised in that** said means are constituted by at least one peripheral projection (25) formed around the shaft (10) of the articulation (A1) of the fixing point (P1).

8. Suspension device according to any one of claims 4 to 7, **characterised in that** each point (P1) for fixing the plate (L) to the cabin (1) comprises means for best providing the desired levels of linear rigidity along a plurality of axes of the fixing point, these means being interposed between the metal casing (16) and the plate (L).

9. Suspension device according to claim 8, **characterised in that** said means allow the levels of linear rigidity of the points (P1) for fixing the plate (L) to the cabin (1) to be adjusted along the guiding axes (X-X, Y-Y).

10. Suspension device according to claim 8, **characterised in that** said means are constituted by two blocks (18) of elastomer which are fitted at one side and the other of the plate (L), for example, by means of adhesive-bonding, and which are accommodated inside the casing (16).

11. Suspension device according to claim 10, **characterised in that** the two blocks (18) of elastomer are accommodated inside the casing (16), providing spaces (20a, 20b) which define resilient or progressive stops.

12. Suspension device according to any one of the preceding claims, **characterised in that** each resilient articulation (A2) of the support points (P2) of the plate (L) on the chassis (5) of the vehicle is an articulation of the resilient type which is constituted by a shaft (30) which is fixedly joined to the plate (L), by a block (32) of elastomer material which is fitted around the shaft (30) and by two casings (34a, 34b) which are fixedly joined to the chassis and which are fixed to each other and surround the block (32) so as to precompress it.

13. Suspension device according to claim 12, **characterised in that** the shaft (30) has a through-opening (35), through which the plate (L) extends.

14. Suspension device according to claim 12 or 13, **characterised in that** the casing (34a) is connected to the chassis (5) of the vehicle by means of a device (40) for tilting the cabin (1) relative to the chassis (5).

15. Suspension device according to any one of claims 12 to 14, **characterised in that** each point (P2) for fixing the plate (L) to the chassis (5) also comprises means for providing a high level of linear rigidity along the guiding axes (X-X, Y-Y) and a high level of angular rigidity about the suspension axis (Z-Z).

16. Suspension device according to claim 15, **characterised in that** the means are constituted by at least one peripheral projection (42) which is formed around the shaft (30) of the articulation (A2) of the fixing point (P2).

17. Suspension device according to any one of claims 12 to 16, **characterised in that** each point (P2) for fixing the plate (L) to the chassis (5) also comprises a resilient or progressive stop (20c) along the suspension axis (Z-Z).

18. Suspension device according to claim 17, **characterised in that** the stop (20c) is constituted by an annular space which is delimited between two projections (44) of elastomer which are fitted at one side and the other of the plate (L) and a free end of the casing (34).

19. Industrial vehicle comprising at least a chassis (5) and a cabin (1), **characterised in that** the cabin (1) is carried by the chassis (5) by means of a suspension system which comprises at least one device as defined by any one of the preceding claims.

20. Industrial vehicle according to claim 19, **characterised in that** the suspension device is located at the front and/or at the rear of the cabin.

## Patentansprüche

1. Aufhängungsvorrichtung einer Fahrerkabine (1) auf einem Fahrgestell (5) eines Nutzfahrzeugs, wobei die Vorrichtung wenigstens eine elastische Lamelle (I) umfasst, die dazu geeignet ist, an zwei Punkten (P1) auf der Seite der Fahrerkabine (1) und an zwei Punkten (P2) auf der Seite des Fahrgestells (5) befestigt zu sein, wobei dieses Aufhängungssystem auf eine Führungsachse (X-X), die längs zum Fahrzeug und senkrecht zu der elastischen Lamelle (L) ist, auf eine Führungsachse (Y-Y), die senkrecht zu der Achse (X-X) ist, und eine vertikale Aufhängungsachse (Z-Z), die zu den zwei Achsen (X-X; Y-Y) senkrecht ist, Bezug nimmt, **dadurch gekennzeichnet, dass** jeder Befestigungspunkt (P1, P2) der Lamelle (L) ein elastisches Gelenk (A1, A2), insbesondere vom elastischen Lagerzapfentyp, umfasst, und dadurch, dass bezüglich der vertikalen Achse (Z-Z) einerseits und der zwei Achsen (X-X; Y-Y) andererseits jeder Befestigungspunkt (P1, P2) auf der Seite der Fahrerkabine (1) und auf der Seite des Fahrgestells (5) eine geringe Winkelsteifigkeit um die Gelenkachse (X-X) und eine hohe Winkelsteifigkeit um die weiteren Achsen (Y-Y, Z-Z) gewährleistet.

2. Aufhängungsvorrichtung nach Anspruch 1, **dadurch gekennzeichnet, dass** die Lamelle (L) aus Verbundmaterial hergestellt ist, zum Beispiel aus Epoxidharz.

3. Aufhängungsvorrichtung nach einem der Ansprüche 1 und 2, **dadurch gekennzeichnet, dass** die Winkelsteifigkeiten der Befestigungspunkte (P1, P2) der Lamelle (L) durch die Form und die Abmessungen bestimmt sind, die den Elementen dieser Befestigungspunkte verliehen sind.

4. Aufhängungsvorrichtung nach einem der vorherigen Ansprüche, **dadurch gekennzeichnet, dass** das Gelenk (A1) jedes Befestigungspunkts (P1) der Lamelle (L) an der Fahrerkabine (1) ein elastisches Gelenk (A1) ist, das aus einer Welle (10), die einteilig mit der Fahrerkabine (1) verbunden ist, durch einen Block (14) aus einem Elastomer, der um die Welle (10) herum angeordnet ist, und durch eine Metallarmierung (16), die einteilig mit der Lamelle (L) verbunden und die den Block (14) aus dem Elastomer derart umschließt, dass er vorkomprimiert ist, gebildet ist.

5. Aufhängungsvorrichtung nach Anspruch 4, **dadurch gekennzeichnet, dass** die Armierung (16) aus einem Teil oder aus zwei Teilen besteht.

6. Aufhängungsvorrichtung nach Anspruch 4 oder 5, **dadurch gekennzeichnet, dass** jeder Befestigungspunkt (P1) der Lamelle (L) an der Fahrerkabine (1) ferner Mittel umfasst, um eine hohe lineare Steifigkeit entlang der Achse (X-X) und eine hohe Winkelsteifigkeit um die Aufhängungsachse (Z-Z) zu gewährleisten.

7. Aufhängungsvorrichtung nach Anspruch 6, **dadurch gekennzeichnet, dass** die Mittel aus wenigstens einem Umfangsbuckel (25) gebildet sind, der um die Welle (10) des Gelenks (A1) des Befestigungspunkts (P1) ausgebildet ist.

8. Aufhängungsvorrichtung nach einem der Ansprüche 4 bis 7, **dadurch gekennzeichnet, dass** jeder Befestigungspunkt (P1) der Lamelle (L) an der Fahrerkabine (1) Mittel umfasst, um bestmöglich die gewünschten linearen Steifigkeiten entlang mehrerer Achse des Befestigungspunkts umfasst, wobei diese Mittel zwischen der Metallarmierung (16) und der Lamelle (L) angeordnet sind.

9. Aufhängungsvorrichtung nach Anspruch 8, **dadurch gekennzeichnet, dass** die Mittel eine Einstellung der linearen Steifigkeiten der Befestigungspunkte (P1) der Lamelle (L) an der Fahrerkabine (1) entlang der Führungsachsen (X-X, Y-Y) erlauben.

10. Aufhängungsvorrichtung nach Anspruch 8, **dadurch gekennzeichnet, dass** die Mittel durch zwei Elastomerblöcke (18) gebildet sind, auf beiden Seiten der Lamelle (L) zum Beispiel durch Kleben angebracht und Inneren der Armierung (16) aufgenommen sind.

11. Aufhängungsvorrichtung nach Anspruch 10, **dadurch gekennzeichnet, dass** die zwei Elastomerblöcke (18) im Inneren der Armierung (16) aufgenommen sind, indem sie Räume (20a, 20b) aussparen, die elastische und progressive Anschläge definieren.

12. Aufhängungsvorrichtung nach einem der vorherigen Ansprüche, **dadurch gekennzeichnet, dass** jedes elastische Gelenk (A2) der Stützpunkte (P2) der Lamelle (L) am Fahrgestell (5) des Fahrzeugs ein elastisches Gelenk ist, das aus einer Welle (30), die einteilig mit der Lamelle (L) verbunden ist, einem Elastomerblock (32), der um die Welle (30) angeordnet ist, und aus zwei Armierungen (34a, 34b), die einteilig mit dem Fahrgestell verbunden und miteinander verbunden sind und die den Block (32) umschließen, wobei sie ihn vorkomprimieren, gebildet ist.

13. Aufhängungsvorrichtung nach Anspruch 12, **dadurch gekennzeichnet, dass** die Welle (30) eine Queröffnung (35) aufweist, die von der Lamelle (L) durchdrungen wird.

14. Aufhängungsvorrichtung nach Anspruch 12 oder 13, **dadurch gekennzeichnet, dass** die Armierung (34a) mit dem Fahrgestell (5) des Fahrzeugs mit Hilfe einer Kippvorrichtung (40) der Fahrerkabine (1) bezüglich des Fahrgestells (5) verbunden ist.

15. Aufhängungsvorrichtung nach einem der Ansprüche 12 bis 14, **dadurch gekennzeichnet, dass** jeder Befestigungspunkt (P2) der Lamelle (L) an dem Fahrgestell (5) ferner Mittel umfasst, um eine hohe lineare Steifigkeit entlang der Führungsachsen (X-X; Y-Y) und eine hohe Winkelsteifigkeit um die Aufhängungsachse (Z-Z) zu gewährleisten.

16. Aufhängungsvorrichtung nach Anspruch 15, **dadurch gekennzeichnet, dass** die Mittel aus wenigstens einem Umfangsbuckel (42) gebildet sind, die um die Welle (30) des Gelenks (A2) des Befestigungspunkts (P2) ausgebildet sind.

17. Aufhängungsvorrichtung nach einem der Ansprüche 12 bis 16, **dadurch gekennzeichnet, dass** jeder Befestigungspunkt (P2) der Lamelle (L) am Fahrgestell (5) ferner einen elastischen oder progressiven Anschlag (20c) entlang der Aufhängungsachse (Z-Z) umfasst.

18. Aufhängungsvorrichtung nach Anspruch 17, **dadurch gekennzeichnet, dass** der Anschlag (20c) aus einem ringförmigen Raum gebildet ist, der zwischen zwei Buckeln (44) aus Elastomer, die mit der einen und der anderen Seite der Lamelle (L) verbunden sind, und einem freien Ende der Armierung (34) begrenzt ist.

19. Nutzfahrzeug, das wenigstens ein Fahrgestell (5) und eine Fahrerkabine (1) umfasst, **dadurch gekennzeichnet, dass** die Fahrerkabine (1) durch das Fahrgestell (5) mit Hilfe eines Aufhängungssystems getragen wird, das wenigstens eine Vorrichtung umfasst, wie sie in einem der vorherigen Ansprüche definiert ist.

20. Nutzfahrzeug nach Anspruch 19, **dadurch gekennzeichnet, dass** die Aufhängungsvorrichtung vor und/oder hinter der Fahrerkabine angeordnet ist.
